# EUROPEAN PATENT APPLICATION

(11) **EP 4 729 476 A1**
(43) Date of publication of application: **22.04.2026**
(21) Application number: 25153096.0
(22) Date of filing: 21.01.2025
(51) Int. Cl.: C01B 25/45, H01M 4/36, H01M 4/58, H01M 10/052, H01M 10/0525, H01M 4/62, H01M 4/02

(54) **LITHIUM-MANGANESE-IRON-PHOSPHATE POSITIVE ELECTRODE MATERIAL AND PREPARATION METHOD THEREFOR AND LITHIUM-ION BATTERY**

(30) Priority: 15.10.2024 CN 202411440133
(71) Applicant: Sichuan Tianli Lithium Energy Co., Ltd, Ya'an City, Sichuan 625000 (CN)
(72) Inventor: YUE, Lei, Ya'an City 625000 (CN); WANG, Ruiqing, Ya'an City 625000 (CN); LI, Wen, Ya'an City 625000 (CN); JING, Ruyi, Ya'an City 625000 (CN); CHEN, Shumao, Ya'an City 625000 (CN); ZHU, Zungang, Ya'an City 625000 (CN)
(74) Representative: Hertin und Partner Rechts- und Patentanwälte PartG mbB

(57) **Abstract**

The present invention provides a lithium-manganese-iron-phosphate positive electrode material and a preparation method therefor and a lithium-ion battery, relating to the field of secondary batteries. The lithium-manganese-iron-phosphate positive electrode material includes: an inner core and a coating layer located on an outer surface of the inner core, wherein a material for forming the inner core includes lithium manganese iron phosphate, a material for forming the coating layer includes a high-conductivity compound, the high-conductivity compound includes manganese and a non-metallic element, and the non-metallic element includes any one of B, S, P, Si, As, and Se. In the present invention, by forming the coating layer containing the high-conductivity compound on the outer surface of lithium manganese iron phosphate, dissolution of manganese element in the lithium manganese iron phosphate can be inhibited while resistivity of the material is reduced, and cycle performance of the material is improved.

## Description

### TECHNICAL FIELD

The present invention relates to the technical field of secondary batteries, and particularly to a lithium-manganese-iron-phosphate positive electrode material and a preparation method therefor and a lithium-ion battery.

### BACKGROUND ART

Lithium manganese iron phosphate (LiMnFePO₄) is an emerging positive electrode material for lithium-ion batteries. Lithium manganese iron phosphate combines advantages of lithium iron phosphate (LiFePO₄) and lithium manganese phosphate (LiMnPO₄), and exhibits high energy density, good thermal stability and good cycle life, thus attracting extensive attention. Generally, by combining the advantages of iron and manganese, the lithium-manganese-iron-phosphate positive electrode material improves overall performance of the batteries, so that it has great application potential in electric automobiles and large-scale energy storage systems.

However, excessive addition of manganese element into lithium manganese iron phosphate will result in poor electrical conductivity of material, and a problem of manganese element dissolution will occur to the material in a process of charging and discharging batteries, thus remarkably reducing the cycle life of lithium manganese iron phosphate. Therefore, it is necessary to improve the lithium-manganese-iron-phosphate positive electrode material and a preparation method therefor.

### SUMMARY

The present invention aims at providing a lithium-manganese-iron-phosphate positive electrode material and a preparation method therefor and a lithium-ion battery, so as to solve the above problems.

In order to achieve the above objective, the present invention adopts the following technical solutions.

The present invention provides a lithium-manganese-iron-phosphate positive electrode material, including: an inner core and a coating layer located on an outer surface of the inner core, where a material for forming the inner core includes lithium manganese iron phosphate, and a material for forming the coating layer includes a high-conductivity compound, where the high-conductivity compound includes manganese and a non-metallic element, and the non-metallic element includes any one of B, S, P, Si, As, and Se.

According to embodiments of the present invention, a proportion of the high-conductivity compound in the lithium-manganese-iron-phosphate positive electrode material ranges from 0.05 wt% to 0.5 wt%;
and/or the coating layer further includes carbon, a proportion of the carbon in the coating layer in the lithium-manganese-iron-phosphate positive electrode material ranges from 1.5 wt% to 2.5 wt%;
and/or, the coating layer has a thickness ranging from 20 nm to 60 nm.

According to embodiments of the present invention, a molar amount of manganese in the lithium manganese iron phosphate accounts for 60% or more of a sum of molar amounts of manganese and iron;
and/or, the material for forming the inner core includes carbon, and a proportion of the carbon in the inner core ranges from 0.1 wt% to 0.5 wt% of the inner core.

The present invention further provides a preparation method for the lithium-manganese-iron-phosphate positive electrode material in the preceding, including:
mixing a lithium source, a first manganese source, an iron source, a phosphorus source, a first reducing carbon source and water, and performing first spray-drying and a first sintering treatment in sequence, so as to render an inner-core material; and
mixing the inner-core material, a second reducing carbon source, a non-metallic element, a second manganese source, and water, and performing second spray-drying and a second sintering treatment in sequence, so as to render the lithium-manganese-iron-phosphate positive electrode material,
where the non-metallic element includes any one of B, S, P, Si, As, and Se.

According to embodiments of the present invention, the lithium source includes a lithium salt or a hydrate of the lithium salt, where the lithium salt includes at least one of lithium carbonate, lithium phosphate, lithium dihydrogen phosphate, and lithium hydroxide;
and/or the first manganese source includes at least one of trimanganese tetroxide, manganese dioxide, dimanganese trioxide, and manganese carbonate;
and/or, the iron source includes at least one of iron phosphate, iron oxalate, iron sesquioxide, and ferroferric oxide;
and/or, the phosphorus source includes at least one of lithium dihydrogen phosphate, iron phosphate, ammonium dihydrogen phosphate, and phosphoric acid;
and/or, a molar ratio of lithium in the lithium source to manganese in the first manganese source, iron in the iron source, and phosphorus in the phosphorus source is 1.05:(0.50-0.90):(0.10-0.50):(1.00-1.03);
and/or, the first reducing carbon source includes glucose;
and/or, a content of the first reducing carbon source satisfies at least one of the following conditions: a ratio of a molar amount of carbon element in the first reducing carbon source to a sum of molar amounts of trivalent metal elements in the first manganese source and the iron source is (1.02-1.1):4, and a ratio of the molar amount of the carbon element in the first reducing carbon source to a molar amount of quadrivalent manganese element in the first manganese source is (1.02-1.1):2;
and/or, before performing the first spray-drying, the method further includes a step of performing first grinding, where D50 of material after the first grinding ranges from 0.18 µm to 0.22 µm;
and/or, the first sintering is performed under protection of an inert gas, and the first sintering is performed at a temperature ranging from 660 °C to 790 °C for a duration of 8-14 h.

According to embodiments of the present invention, the second reducing carbon source includes at least one of citric acid, ascorbic acid, tartaric acid, and gluconic acid;
and/or, the second manganese source includes at least one of manganese acetate, manganese citrate, manganese oxalate, and manganese tartrate.

According to embodiments of the present invention, a mass ratio of the inner-core material to the second reducing carbon source is (17-20): 1.

According to embodiments of the present invention, the molar ratio of the non-metallic element to the manganese in the second manganese source is (1-2): 1;
and/or, the non-metallic element accounts for 0.015%-0.30% of a mass of the inner-core material;
and/or, before performing the second spray-drying, the method further includes a step of performing second grinding, where D50 of material after the second grinding ranges from 0.20 µm to 0.40 µm.

According to embodiments of the present invention, after mixing the inner-core material, the second reducing carbon source, the non-metallic element, the second manganese source, and water, the method further includes a step of adjusting pH of slurry, so as to adjust the pH of the slurry to be 4.0-6.0;
and/or the second sintering is performed under protection of an inert gas, and the second sintering is performed at a temperature ranging from 550 °C to 610 °C for a duration of 4-8 h.

The present invention further provides a lithium-ion battery, where the lithium-ion battery includes the lithium-manganese-iron-phosphate positive electrode material in the preceding or includes the lithium-manganese-iron-phosphate positive electrode material prepared by the preparation method for the lithium-manganese-iron-phosphate positive electrode material in the preceding.

Compared with the prior art, the present invention has following beneficial effects.

In the present invention, by forming the coating layer containing the high-conductivity compound on the outer surface of lithium manganese iron phosphate, dissolution of manganese element in the lithium manganese iron phosphate can be inhibited while resistivity of the material is reduced, and cycle performance of the material is improved.

### BRIEF DESCRIPTION OF DRAWINGS

In order to more clearly illustrate technical solutions of examples of the present invention, drawings that need to be used in the examples will be briefly introduced below. It should be understood that the following drawings merely show some examples of the present invention, and thus should not be considered as limitation to the scope of the present invention.
FIG. 1 is an SEM image of a lithium-manganese-iron-phosphate positive electrode material prepared in Example 1;
FIG. 2 is a TEM image of the lithium-manganese-iron-phosphate positive electrode material prepared in Example 1; and
FIG. 3 is a TEM image of a lithium-manganese-iron-phosphate positive electrode material prepared in Comparative Example 3.

### DETAILED DESCRIPTION OF EMBODIMENTS

For terms as used herein:
the term "prepared by..." is synonymous with "comprising". The term "comprising", "including", "having", "containing" or any other variations thereof, as used herein, are intended to cover non-exclusive inclusions. For example, a composition, step, method, article or device comprising listed elements is not necessarily only limited to those elements, but can include other elements not explicitly listed or elements inherent to such composition, step, method, article or apparatus.

The conjunction "consisting of..." excludes any unspecified element, step or component. If used in a claim, this phrase will make the claim closed, so that the claim does not contain materials other than those described, but conventional impurities related thereto are excluded. When the phrase "consisting of..." appears in a clause of a claim body rather than immediately following a subject, it only defines elements described in the clause; and other elements are not excluded from the claim as a whole.

When an amount, concentration, or other values or parameters are expressed in a range, a preferred range, or a series of range defined by an upper preferred limit value and a lower preferred limit value, this should be further understood as specifically disclosing all ranges formed by any pair of an upper value in any range or a preferred value and a lower value of any range or a preferred value, regardless of whether this range is separately disclosed. For example, if a range "1-5" is disclosed, the described range should be construed as including ranges such as "1-4", "1-3", "1-2", "1-2 and 4-5", and "1-3 and 5". When a numerical range is described herein, this range is intended to include end values thereof and all integers and fractions within this range, unless otherwise stated.

In these examples, unless otherwise specified, parts and percentages are all defined by mass.

The term "part by mass" refers to a basic measurement unit that represents a mass ratio relationship between a plurality of components, where 1 part can represent any unit mass, such as 1 g, 2.689 g, and the like. Assuming that the part by mass of a component A is a parts, and the part by mass of a component B is b parts, it means that the ratio of the mass of the component A to the mass of the component B is a:b. Alternatively, it means that the mass of the component A is aK, and the mass of the component B is bK (K is any number, and represents a multiplication factor). Unmistakably, unlike mass fractions, the sum of parts by mass of all components is not limited to 100 parts.

"And/or" is used to mean that one or both of the illustrated situations may occur, for example, A and/or B include (A and B) and (A or B).

The present invention provides a lithium-manganese-iron-phosphate positive electrode material, including: an inner core and a coating layer located on an outer surface of the inner core, where a material for forming the inner core includes lithium manganese iron phosphate, and a material for forming the coating layer includes a high-conductivity compound, where the high-conductivity compound includes manganese and a non-metallic element, and the non-metallic element includes any one of B, S, P, Si, As, and Se.

In the present invention, by forming the coating layer containing the high-conductivity compound on the outer surface of lithium manganese iron phosphate, electrical conductivity of the lithium-manganese-iron-phosphate positive electrode material can be improved, and meanwhile the problem of manganese dissolution can also be solved.

Specifically, the high-conductivity compound in the present invention has good stability and electrical conductivity, and improves stability of manganese element in the positive electrode material. The Mn element in the positive electrode material of the present invention is not easy to disproportionate to form bivalent and quadrivalent manganese. Moreover, Mn in the high-conductivity compound will not affect performance of lithium manganese iron phosphate lattices, and Mn in the high-conductivity compound can also play a certain role in repairing loss of manganese dissolution in charging and discharging processes, thus being beneficial to improving electrochemical performance of the positive electrode material. If the high-conductivity compound contains metals other than Mn, other metal ions may enter the lithium manganese iron phosphate lattices, to cause reduction of material performance.

According to embodiments of the present invention, the high-conductivity compound includes MnB₂, MnS, MnP, MnSi, MnAs, and MnSe.

According to embodiments of the present invention, a proportion of the high-conductivity compound in the lithium-manganese-iron-phosphate positive electrode material ranges from 0.05 wt% to 0.5 wt%. If the proportion of the high-conductivity compound in the lithium-manganese-iron-phosphate positive electrode material is too low, the manganese dissolution is slightly improved. As the high-conductivity compound does not have electrochemical activity, if the proportion of the high-conductivity compound in the lithium-manganese-iron-phosphate positive electrode material is too high, it will cause polarization phenomenon produced in the processes of charging and discharging the battery to be intensified, and lead to degradation of voltage platform and rate performance of the battery.

For example, the proportion of the high-conductivity compound in the lithium-manganese-iron-phosphate positive electrode material can be 0.05 wt%, 0.1 wt%, 0.14 wt%, 0.15 wt%, 0.17 wt%, 0.2 wt%, 0.3 wt%, 0.4 wt%, 0.5 wt% or any value between 0.05 wt% and 0.5 wt%.

And/or the coating layer further includes carbon, a proportion of the carbon in the coating layer in the lithium-manganese-iron-phosphate positive electrode material ranges from 1.5 wt% to 2.5 wt%. Thus, the positive electrode material is enabled to have both excellent electrical conductivity and high energy density. If the proportion of carbon in the coating layer in the lithium-manganese-iron-phosphate positive electrode material is too low, it will cause poor electrical conductivity of the positive electrode material. If the proportion of carbon in the coating layer in the lithium-manganese-iron-phosphate positive electrode material is too high, a compaction density of the positive electrode material is low, thus affecting the energy density of the battery.

For example, the proportion of carbon in the coating layer in the lithium-manganese-iron-phosphate positive electrode material can be 1.5 wt%, 1.6 wt%, 1.7 wt%, 1.8 wt%, 1.9 wt%, 2.0 wt%, 2.1 wt%, 2.2 wt%, 2.3 wt%, 2.4 wt%, 2.5 wt% or any value between 1.5 wt% and 2.5 wt%.

And/or, a thickness of the coating layer ranges from 20 nm to 60 nm.

For example, the thickness of the coating layer can be 20 nm, 30 nm, 40 nm, 50 nm, 60 nm or any value between 20 nm and 60 nm.

According to embodiments of the present invention, a molar amount of manganese in the lithium manganese iron phosphate accounts for 60% or more of a sum of molar amounts of manganese and iron;
and/or, the material for forming the inner core includes carbon, and a proportion of the carbon in the inner core ranges from 0.1 wt% to 0.5 wt% of the inner core.

For example, the proportion of the carbon in the inner core can be 0.1 wt%, 0.2 wt%, 0.3 wt%, 0.4 wt%, 0.5 wt% or any value between 0.1 wt% and 0.5 wt% of the inner core.

The present invention further provides a preparation method for the lithium-manganese-iron-phosphate positive electrode material in the preceding, including:
mixing a lithium source, a first manganese source, an iron source, a phosphorus source, a first reducing carbon source and water, and performing first spray-drying and a first sintering treatment in sequence, so as to render an inner-core material; and
mixing the inner-core material, a second reducing carbon source, a non-metallic element, a second manganese source, and water, and performing second spray-drying and a second sintering treatment in sequence, so as to render the lithium-manganese-iron-phosphate positive electrode material.

In the above, the non-metallic element includes any one of B, S, P, Si, As, and Se.

According to embodiments of the present invention, the lithium source includes a lithium salt or a hydrate of the lithium salt, where the lithium salt includes at least one of lithium carbonate, lithium phosphate, lithium dihydrogen phosphate, and lithium hydroxide;
and/or the first manganese source includes at least one of trimanganese tetroxide, manganese dioxide, dimanganese trioxide, and manganese carbonate;
and/or, the iron source includes at least one of iron phosphate, iron oxalate, iron sesquioxide, and ferroferric oxide;
and/or, the phosphorus source includes at least one of lithium dihydrogen phosphate, iron phosphate, ammonium dihydrogen phosphate, and phosphoric acid;
and/or, a molar ratio of lithium in the lithium source to manganese in the first manganese source, iron in the iron source, and phosphorus in the phosphorus source is 1.05:(0.50-0.90):(0.10-0.50):(1.00-1.03).

For example, the molar ratio of lithium in the lithium source to manganese in the first manganese source, iron in the iron source, and phosphorus in the phosphorus source can be 1.05:0.50:0.10:1.00, 1.05:0.65:0.35:1.02, 1.05:0.60:0.40:1.02, 1.05:0.70:0.30:1.02, 1.05:0.90:0.50:1.03 or any value in 1.05:(0.50-0.90):(0.10-0.50):(1.00-1.03).

And/or, the first reducing carbon source includes glucose. By adding the first reducing carbon source, trivalent and/or quadrivalent manganese ions in the first manganese source can be reduced to be bivalent, and trivalent iron ions in the iron source can be reduced to be bivalent, thus being beneficial to forming a lithium-manganese-iron-phosphate crystalline phase.

And/or, a content of the first reducing carbon source satisfies at least one of the following conditions: a ratio of a molar amount of carbon element in the first reducing carbon source to a sum of molar amounts of trivalent metal elements in the first manganese source and the iron source is (1.02-1.1):4, and a ratio of the molar amount of the carbon element in the first reducing carbon source to a molar amount of quadrivalent manganese element in the first manganese source is (1.02-1.1):2.

And/or, before performing the first spray-drying, the method further includes a step of performing first grinding, where D50 of material after the first grinding ranges from 0.18 µm to 0.22 µm.

And/or, the first sintering is performed under protection of an inert gas, and the first sintering is performed at a temperature ranging from 660 °C to 790°C for a duration of 8-14 h.

For example, the temperature of the first sintering can be 660 °C, 680 °C, 700 °C, 720 °C, 750 °C, 790 °C or any value between 660 °C and 790 °C.

The first sintering can be performed for 8 h, 9 h, 10 h, 11 h, 12 h, 13 h, 14 h or any value between 8 h and 14 h.

According to embodiments of the present invention, the second reducing carbon source includes at least one of citric acid, ascorbic acid, tartaric acid, and gluconic acid. The above substances have strong reducibility and acidity in an aqueous solution, and can avoid an oxidation reaction of a non-metallic element, thus being beneficial to generation of the high-conductivity compound. If a carbon source with weak or no reducibility is used, it is easy to cause oxidation of the non-metallic element in a grinding process, which is not conducive to synthesis of the high-conductivity compound. Moreover, the addition of the second reducing carbon source can also form a carbon-containing coating layer on the outer surface of the inner core of lithium manganese iron phosphate.

And/or, the second manganese source includes at least one of manganese acetate, manganese citrate, manganese oxalate, and manganese tartrate. The second manganese source in the present invention does not contain other elements than C, H, O, and Mn. The second manganese source can react to generate H₂O and CO₂, and other metallic or non-metallic impurities will not be introduced into the lattices or the coating layer in the sintering process to affect the electrical conductivity. Moreover, the second manganese source has high solubility in solution, and a soluble second manganese salt can react more uniformly with a non-metallic element in a liquid phase, thus being beneficial to forming a uniform coating layer.

According to embodiments of the present invention, a mass ratio of the inner-core material to the second reducing carbon source is (17-20):1. When contents of the inner-core material and the second reducing carbon source satisfy the above condition, the positive electrode material is enabled to have both high energy density and high electrical conductivity. If the content of the second reducing carbon source is too low, the electrical conductivity of the positive electrode material will be reduced. If the content of the second reducing carbon source is too high, as the content of non-active substances is high, the energy density of the positive electrode material will be reduced.

For example, the mass ratio of the inner-core material to the second reducing carbon source can be 17:1, 18:1, 19:1, 20:1 or any value in (17-20):1.

According to embodiments of the present invention, a molar ratio of the non-metallic element to the manganese in the second manganese source is (1-2): 1.

For example, the molar ratio of the non-metallic element to the manganese in the second manganese source can be 1:1, 2:1 or any value in (1-2):1.

And/or, the non-metallic element accounts for 0.015%-0.30% of a mass of the inner-core material.

For example, the non-metallic element accounts for 0.015%, 0.02%, 0.025%, 0.03%, 0.037%, 0.04%, 0.048%, 0.049%, 0.05%, 0.055%, 0.06%, 0.1%, 0.20%, 0.25%, 0.30% or any value between 0.015% and 0.30% of the mass of the inner-core material.

And/or, before performing the second spray-drying, the method further includes a step of performing second grinding, where D50 of material after the second grinding ranges from 0.20 µm to 0.40 µm. After the first sintering, the inner-core material has a larger particle size. The inner-core material is secondary particle agglomerates formed by agglomeration of primary particles, and the primary particles can be dispersed through the second grinding, which helps to form a uniform coating layer on surfaces of the primary particles. Moreover, through the second grinding, the particle size of the non-metallic element can also be reduced, which is beneficial to reaction of the non-metallic element with the Mn element in the second manganese source to form the high-conductivity compound.

If the material after the second grinding has a too small particle size, the energy efficiency is high. If the material after the second grinding has a too large particle size, the non-metallic element has poor activity, which will cause reaction to be incomplete, is not conducive to formation of the high-conductivity compound, and is also easy to produce impurities, reduce purity of a product, and further affect the performance of the positive electrode material.

According to embodiments of the present invention, after mixing the inner-core material, the second reducing carbon source, the non-metallic element, the second manganese source, and water, the method further includes a step of adjusting pH of slurry, so as to adjust the pH of the slurry to be 4.0-6.0. If the slurry is highly acidic, it will cause dissolution of the inner-core material. If the slurry is highly alkaline, it is not beneficial to forming the high-conductivity compound.

Further, the second reducing carbon source and lithium dihydrogen phosphate (phosphorus source) are both acidic, and by adjusting an addition amount of the second reducing carbon source and/or lithium dihydrogen phosphate (phosphorus source), the pH of the slurry can be maintained within a range of 4.0-6.0.

For example, the pH of the slurry can be adjusted to be 4.0, 5.0, 6.0 or any value between 4.0 and 6.0.

And/or, the second sintering is performed under protection of an inert gas, and a temperature of the second sintering ranges from 550 °C to 610 °C. At the above sintering temperature, it is beneficial for the positive electrode material to have both high structural stability and high electrical conductivity. If the temperature of the second sintering is too low, it is not beneficial to graphitization of carbon, and the electrical conductivity of the positive electrode material will be weakened; and at the same time, reaction of forming the high-conductivity compound is incomplete. If the temperature of the second sintering is too high, manganese in the second manganese source tends to be doped in the lattices of lithium manganese iron phosphate (LMFP), which is adverse to structural stability of the positive electrode material. Meanwhile, the manganese and the non-metallic element are likely to form a compound with a non-stoichiometric ratio, which will deteriorate the electrical conductivity of the positive electrode material.

For example, the temperature of the second sintering can be 550 °C, 560 °C, 570 °C, 580 °C, 590 °C, 600 °C, 610 °C or any value between 550 °C and 610 °C.

A duration of the second sintering ranges from 4 h to 8 h.

For example, the duration of the second sintering can be 4 h, 5 h, 6 h, 7 h, 8 h or any value between 4 h and 8 h.

The present invention further provides a lithium-ion battery. The lithium-ion battery includes the lithium-manganese-iron-phosphate positive electrode material in the preceding or includes a lithium-manganese-iron-phosphate positive electrode material prepared by the preparation method for the lithium-manganese-iron-phosphate positive electrode material in the preceding.

The embodiments of the present invention will be described in detail below in conjunction with specific examples, while those skilled in the art would understand that the following examples are merely used to illustrate the present invention, but should not be considered as limitation to the scope of the present invention. Examples, for which no concrete conditions are specified, are carried out according to conventional conditions or conditions recommended by manufactures. Where manufacturers of reagents or instruments used are not specified, they are conventional products commercially available.

### I. Preparation of lithium-manganese-iron-phosphate positive electrode material

### Example 1

Example 1 provided a lithium-manganese-iron-phosphate positive electrode material, for which a preparation method included:
(1) weighing Li₂CO₃, MnO₂, Fe₂O₃, LiH₂PO₄, and glucose, where contents of Li₂CO₃, MnO₂, Fe₂O₃, and LiH₂PO₄ satisfied that a molar ratio of Li, Mn, Fe, and P elements was 1.05:0.65:0.35: 1.02, a ratio of a molar amount of carbon element in the glucose to a molar amount of trivalent iron element in Fe₂O₃ was 1.05:4, and a ratio of the molar amount of the carbon element in the glucose to a molar amount of MnO₂ was 1.05:2;
   taking water according to a solid content 40% of a slurry after mixing Li₂CO₃, MnO₂, Fe₂O₃, LiH₂PO₄, glucose and water;
   mixing Li₂CO₃, MnO₂, Fe₂O₃, LiH₂PO₄, glucose and water in a stirred tank, then grinding in a sand mill until D50 was 0.20 µm, carrying out spray-drying, performing primary sintering on dried powder at a temperature of 700 °C for 10 h under a condition of N₂, so as to render an inner-core material; and
   detecting the inner-core material by a carbon sulfur analyzer, so as to obtain that carbon in the inner-core material accounted for 0.15 wt% of a mass of the inner-core material; and
(2) performing primary mixing on the inner-core material, citric acid, elemental P, manganese citrate, and pure water, where a mass ratio of the inner-core material to the citric acid was controlled at 18:1 when mixing, the elemental P accounted for 0.055% of the mass of the inner-core material, and a molar ratio of the elemental P to manganese in the manganese citrate was 1:1, adjusting pH of slurry to be 4.6, introducing N₂ into the stirred tank, grinding in the sand mill until D50 was 0.32 µm, then carrying out spray-drying, performing secondary sintering on the dried powder at a temperature of 570 °C for 6 h under a condition of N₂, and after completing the secondary sintering, pulverizing resultant, so as to render the lithium-manganese-iron-phosphate positive electrode material.

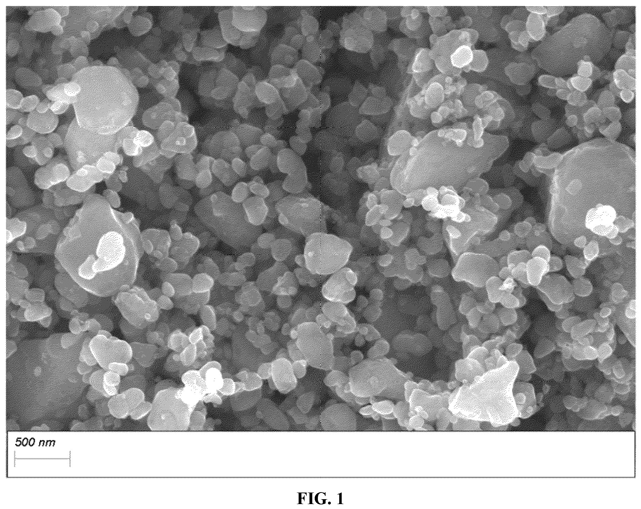

An SEM image of the lithium-manganese-iron-phosphate positive electrode material prepared in Example 1 is as shown in FIG. 1. It can be seen from FIG. 1 that the lithium-manganese-iron-phosphate positive electrode material prepared in Example 1 was composed of primary particles with a smooth surface.

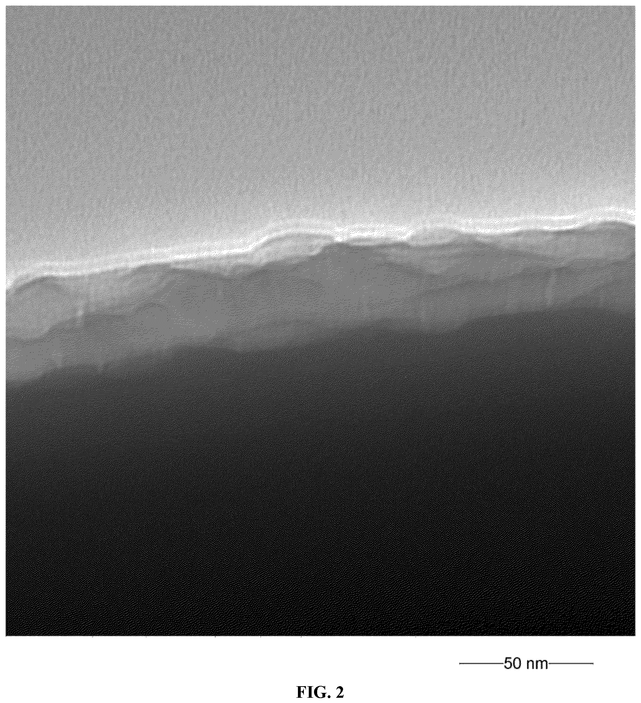

A TEM image of the lithium-manganese-iron-phosphate positive electrode material prepared in Example 1 is as shown in FIG. 2. It can be seen from FIG. 2 that the lithium-manganese-iron-phosphate positive electrode material had an inner core and a coating layer coated on an outer surface of the inner core, where a thickness of the coating layer was 40 nm.

The lithium-manganese-iron-phosphate positive electrode material was detected by the carbon sulfur analyzer, so as to obtain that the carbon in the coating layer accounted for 2.00 wt% of the lithium-manganese-iron-phosphate positive electrode material.

The lithium-manganese-iron-phosphate positive electrode material was detected by an ICP inductive plasma optical emission spectrometer, so as to obtain that generated MnP accounted for 0.15 wt% of the lithium-manganese-iron-phosphate positive electrode material.

### Example 2

Example 2 provided a lithium-manganese-iron-phosphate positive electrode material, for which a preparation method included:
(1) weighing Li₂CO₃, Mn₃O₄, FePO₄, LiH₂PO₄, and glucose, where contents of Li₂CO₃, Mn₃O₄, FePO₄, and LiH₂PO₄ satisfied that a molar ratio of Li, Mn, Fe, and P elements was 1.05:0.60:0.40: 1.02, a ratio of a molar amount of carbon element in the glucose to a molar amount of trivalent metal element in Mn₃O₄ and FePO₄ was 1.06:4;
   taking water according to a solid content 40% of a slurry after mixing Li₂CO₃, Mn₃O₄, FePO₄, LiH₂PO₄, glucose and water;
   mixing Li₂CO₃, Mn₃O₄, FePO₄, LiH₂PO₄, glucose and water in a stirred tank, then grinding in a sand mill until D50 was 0.20 µm, carrying out spray-drying, performing primary sintering on dried powder at a temperature of 700 °C for 10 h under a condition of N₂, so as to render an inner-core material; and
   detecting the inner-core material by a carbon sulfur analyzer, so as to obtain that carbon in the inner-core material accounted for 0.20 wt% of a mass of the inner-core material; and
(2) performing primary mixing on the inner-core material, ascorbic acid, elemental sulfur, manganese acetate, and pure water, where a mass ratio of the inner-core material to the ascorbic acid was controlled at 20:1 when mixing, the elemental sulfur accounted for 0.037% of the mass of the inner-core material, and a molar ratio of the elemental sulfur to manganese in the manganese acetate was 1:1, adjusting pH of slurry to be 5.0, introducing N₂ into the stirred tank, grinding in the sand mill until D50 was 0.35 µm, then carrying out spray-drying, performing secondary sintering on the dried powder at a temperature of 550 °C for 6 h under a condition of N₂, and after completing the secondary sintering, pulverizing resultant, so as to render the lithium-manganese-iron-phosphate positive electrode material.

The lithium-manganese-iron-phosphate positive electrode material prepared in Example 2 had an inner core and a coating layer coated on an outer surface of the inner core, where a thickness of the coating layer was 30 nm.

The lithium-manganese-iron-phosphate positive electrode material was detected by the carbon sulfur analyzer, so as to obtain that the carbon in the coating layer accounted for 1.80 wt% of the lithium-manganese-iron-phosphate positive electrode material.

The lithium-manganese-iron-phosphate positive electrode material was detected by an ICP inductive plasma optical emission spectrometer, so as to obtain that generated MnS accounted for 0.10 wt% of the lithium-manganese-iron-phosphate positive electrode material.

### Example 3

Example 3 provided a lithium-manganese-iron-phosphate positive electrode material, for which a preparation method included:
(1) weighing LiOH·H₂O, Mn₂O₃, FeC₂O₄·2H₂O, 85% H₃PO₄, and glucose, where contents of LiOH·H₂O, Mn₂O₃, FeC₂O₄, ·2H₂O, and 85% H₃PO₄ satisfied that a molar ratio of Li, Mn, Fe, and P elements was 1.05:0.60:0.40:1.02, a ratio of a molar amount of carbon element in the glucose to a molar amount of trivalent manganese element in Mn₂O₃ was 1.08:4;
   taking water according to a solid content 40% of a slurry after mixing LiOH·H₂O, Mn₂O₃, FeC₂O₄·2H₂O, 85% H₃PO₄, glucose and water;
   mixing LiOH·H₂O, Mn₂O₃, FeC₂O₄·2H₂O, 85% H₃PO₄, glucose and water in a stirred tank, then grinding in a sand mill until D50 was 0.20 µm, carrying out spray-drying, performing primary sintering on dried powder at a temperature of 700 °C for 10 h under a condition of N₂, so as to render an inner-core material; and
   detecting the inner-core material by a carbon sulfur analyzer, so as to obtain that carbon in the inner-core material accounted for 0.12 wt% of a mass of the inner-core material; and
(2) performing primary mixing on the inner-core material, tartaric acid, elemental Si, manganese tartrate, and pure water, where a mass ratio of the inner-core material to citric acid was controlled at 17:1 when mixing, the elemental Si accounted for 0.048% of the mass of the inner-core material, and a molar ratio of the elemental Si to manganese in the manganese tartrate was 1:1, adjusting pH of slurry to be 4.8, introducing N₂ into the stirred tank, grinding in the sand mill until D50 was 0.33 µm, then carrying out spray-drying, performing secondary sintering on the dried powder at a temperature of 610 °C for 6 h under a condition of N₂, and after completing the secondary sintering, pulverizing resultant, so as to render the lithium-manganese-iron-phosphate positive electrode material.

The lithium-manganese-iron-phosphate positive electrode material prepared in Example 3 had an inner core and a coating layer coated on an outer surface of the inner core, where a thickness of the coating layer was 50 nm.

The lithium-manganese-iron-phosphate positive electrode material was detected by the carbon sulfur analyzer, so as to obtain that the carbon in the coating layer accounted for 1.85 wt% of the lithium-manganese-iron-phosphate positive electrode material.

The lithium-manganese-iron-phosphate positive electrode material was detected by an ICP inductive plasma optical emission spectrometer, so as to obtain that generated MnSi accounted for 0.14 wt% of the lithium-manganese-iron-phosphate positive electrode material.

### Example 4

Example 4 provided a lithium-manganese-iron-phosphate positive electrode material, for which a preparation method included:
(1) weighing Li₃PO₄, MnCO₃, Fe₂O₃, NH₄H₂PO₄, and glucose, where contents of Li₃PO₄, MnCO₃, Fe₂O₃, and NH₄H₂PO₄ satisfied that a molar ratio of Li, Mn, Fe, and P elements was 1.05:0.70:0.30: 1.02, a ratio of a molar amount of carbon element in the glucose to a molar amount of trivalent iron element in Fe₂O₃ was 1.08:4;
   taking water according to a solid content 40% of a slurry after mixing Li₃PO₄, MnCO₃, Fe₂O₃, NH₄H₂PO₄, glucose and water;
   mixing Li₃PO₄, MnCO₃, Fe₂O₃, NH₄H₂PO₄, glucose and water in a stirred tank, then grinding in a sand mill until D50 was 0.20 µm, carrying out spray-drying, performing primary sintering on dried powder at a temperature of 700 °C for 10 h under a condition of N₂, so as to render an inner-core material; and
   detecting the inner-core material by a carbon sulfur analyzer, so as to obtain that carbon in the inner-core material accounted for 0.18 wt% of a mass of the inner-core material; and
(2) performing primary mixing on the inner-core material, ascorbic acid, elemental B, manganese tartrate, and pure water, where a mass ratio of the inner-core material to the ascorbic acid was controlled at 20:1 when mixing, the elemental B accounted for 0.049% of the mass of the inner-core material, and a molar ratio of the elemental B to manganese in the manganese tartrate was 2:1, adjusting pH of slurry to be 5.2, introducing N₂ into the stirred tank, grinding in the sand mill until D50 was 0.36 µm, then carrying out spray-drying, performing secondary sintering on the dried powder at a temperature of 580 °C for 6 h under a condition of N₂, and after completing the secondary sintering, pulverizing resultant, so as to render the lithium-manganese-iron-phosphate positive electrode material.

The lithium-manganese-iron-phosphate positive electrode material prepared in Example 4 had an inner core and a coating layer coated on an outer surface of the inner core, where a thickness of the coating layer was 50 nm.

The lithium-manganese-iron-phosphate positive electrode material was detected by the carbon sulfur analyzer, so as to obtain that the carbon in the coating layer accounted for 1.80 wt% of the lithium-manganese-iron-phosphate positive electrode material.

The lithium-manganese-iron-phosphate positive electrode material was detected by an ICP inductive plasma optical emission spectrometer, so as to obtain that generated MnB₂ accounted for 0.17 wt% of the lithium-manganese-iron-phosphate positive electrode material.

### Comparative Example 1

A lithium-manganese-iron-phosphate positive electrode material was prepared according to the method in Example 1, and other steps were the same as that in Example 1, except that manganese citrate and elemental P were not added in step (2) of Comparative Example 1.

### Comparative Example 2

A lithium-manganese-iron-phosphate positive electrode material was prepared according to the method in Example 1, and other steps were the same as that in Example 1, except that only the inner-core material, citric acid, manganese citrate, and pure water were added in step (2) of Comparative Example 2.

### Comparative Example 3

A lithium-manganese-iron-phosphate positive electrode material was prepared according to the method in Example 1, and other steps were the same as that in Example 1, except that step (2) was omitted in Comparative Example 3, and the inner-core material prepared in Example 1 was directly taken as the lithium-manganese-iron-phosphate positive electrode material.

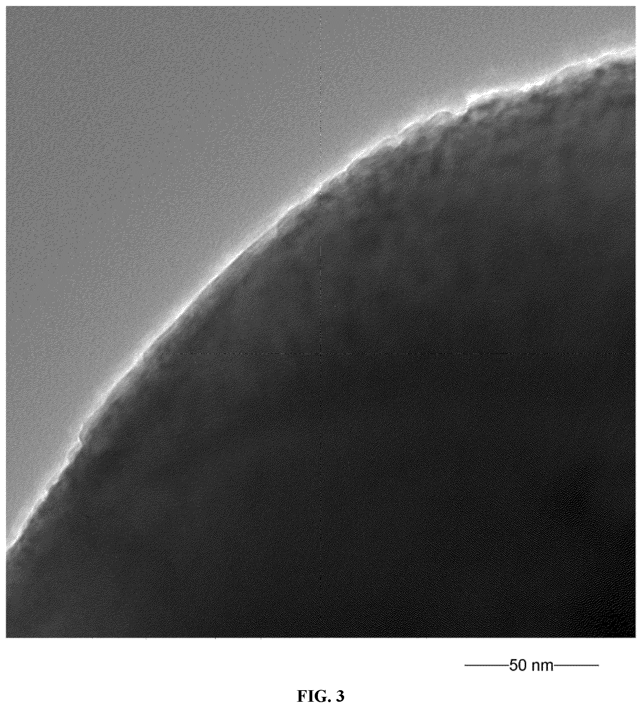

FIG. 3 is a TEM image of the lithium-manganese-iron-phosphate positive electrode material prepared in Comparative Example 3. It can be seen from FIG. 3 that there was no coating layer on an outer surface of a product prepared in Comparative Example 3.

### II. Performance test

1. Test of manganese dissolution: 0.5 g of the lithium-manganese-iron-phosphate positive electrode materials prepared in the examples and comparative examples were respectively weighed and added into a beaker. 100 mL of 0.01 mol/L diluted hydrochloric acid was added into the beaker, and mixture was stirred on a magnetic stirrer for 30 min. The beaker was removed, placed in a thermostatic water bath cauldron at 25 °C and sealed and stationary for 2 h. A filtrate was extracted with a vacuum suction filtration device and poured into a volumetric flask to test a content of dissolved Mn ions using ICP.
2. Test of proportion of high-conductivity compound: 0.5 g of the inner-core materials and materials of finished products (lithium-manganese-iron-phosphate positive electrode materials) of the examples and comparative examples were respectively weighed into a beaker, 20 mL of 12 mol/L dilute hydrochloric acid was added into the beaker, and mixture was heated on a hot plate. After dissolution was completed, resultant was diluted to volume, and then contents of non-metallic ions and Mn were measured using ICP. A weight of the high-conductivity compound was obtained by subtracting the content of the inner-core material (Mn, P or S, Si, B) from a finished product (Mn, P or S, Si, B). A ratio of the weight of the high-conductivity compound to the weight of the finished product was calculated as the proportion of the high-conductivity compound in the positive electrode material.
3. 1.00 g of the lithium-manganese-iron-phosphate positive electrode materials prepared in the examples and comparative examples were respectively weighed and added into a material cavity of a powder resistivity tester, and powder resistivity was tested under a pressure of 8 MPa according to process requirements.
4. Test of capacity and cycle: button batteries were prepared with the lithium-manganese-iron-phosphate positive electrode materials respectively prepared in the examples and comparative examples, and tested for electrochemical performance, including specific steps as follows: uniformly mixing each lithium-manganese-iron-phosphate positive electrode material, a conductive agent cnt and a binder PVDF in a ratio of 90:5:5 in NMP, then coating mixture on an aluminum foil, followed by drying in a vacuum drying oven, and after drying, assembling the battery in an argon glove box, where a positive electrode plate was pressed using a tablet press, a negative electrode was a metal lithium sheet, an electrolytic solution was 1 M LiPF₆-EC: DMC (in a volume ratio of 1:1), and a polypropylene porous film acted as a separator. Parameter conditions used for testing the electrochemical performance included: a testing voltage ranging from 2.5 V to 4.3 V, and charging and discharging at 1 C and cycling to 80% of capacity as a cut-off condition.

Performance test results of the lithium-manganese-iron-phosphate positive electrode materials prepared in the examples and comparative examples are as shown in TABLE 1 below.

**TABLE 1 Table of Performance Test Results of Lithium-Manganese-Iron-Phosphate Positive Electrode Materials Prepared in Examples and Comparative Examples**

| | High-conductivity compound | Proportion of high-conductivity compound (wt%) | Resistivity (Ω·m) | Mn dissolution (ppm) | 0.1 C discharge capacity (mAh/g) | Cycle at room temperature 25 °C to 80% (cycles) | Cycle at high temperature 45 °C to 80% (cycles) |
|---|---|---|---|---|---|---|---|
| Example 1 | MnP | 0.15 | 593 | 482 | 152.7 | 1622 | 933 |
| Example 2 | MnS | 0.10 | 1423 | 1304 | 153.2 | 1422 | 698 |
| Example 3 | MnSi | 0.14 | 776 | 532 | 153.3 | 1582 | 887 |
| Example 4 | MnB₂ | 0.17 | 823 | 602 | 154.8 | 1656 | 862 |
| Comparative Example 1 | None | 0 | 1.32*10⁴ | 2000 | 155.6 | 623 | 430 |
| Comparative Example 2 | None | 0 | 2.32*10⁴ | 2458 | 155.9 | 600 | 385 |
| Comparative Example 3 | None | 0 | Exceed detection upper limit | 18458 | 115.9 | 104 | 61 |

As can be seen from TABLE 1, manganese dissolution rates in Examples 1-4 were remarkably lower than that in Comparative Examples 1-3, and cycle performances in Examples 1-4 were remarkably superior to that in Comparative Examples 1-3.

Compared with Comparative Examples 1-3, the positive electrode materials in Examples 1-4 had both lower manganese dissolution and lower resistivity. This is because the Mn element in Examples 1-4 can form a stable coating layer having the high-conductivity compound, which inhibits the dissolution of the manganese element in the lithium manganese iron phosphate while reducing the resistivity of the material, and can also play a certain role in repairing the Mn dissolution in lithium manganese iron phosphate surface lattices during cycling, so that the cycle performances of the materials are obviously improved.

In Comparative Example 2, manganese citrate was added in step (2), but the cycle performance of the positive electrode material was poor, and the resistivity and Mn dissolution of the positive electrode material were high, which was caused by the fact that Mn did not form a compound with high conductivity and stability with other elements.

Finally, it should be noted that the various examples above are merely used for describing the technical solutions of the present invention, rather than limiting the present invention; while the detailed description is made to the present invention with reference to the various preceding examples, those ordinarily skilled in the art should understand that they still could modify the technical solutions described in the various preceding examples, or make equivalent substitutions to some or all of the technical features therein; and these modifications or substitutions do not make the essence of the corresponding technical solutions depart from the scope of the technical solutions of the various examples of the present invention.

Besides, those skilled in the art could understand that although some of the examples herein include certain features, but not others, included in other examples, combinations of features of different examples are intended to be within the scope of the present invention and form different examples. For example, in the claims, any of the claimed examples can be used in any combination. The information disclosed in the BACKGROUND ART is only for enhancement of understanding of the general background of the present invention and should not be regarded as an acknowledgment or any form of suggestion that the information forms the prior art already generally known to those skilled in the art.

## Claims

1. A lithium-manganese-iron-phosphate positive electrode material, **characterized by** comprising: an inner core and a coating layer located on an outer surface of the inner core, wherein a material for forming the inner core comprises lithium manganese iron phosphate, and a material for forming the coating layer comprises a high-conductivity compound, wherein the high-conductivity compound comprises manganese and a non-metallic element, and the non-metallic element comprises any one of B, S, P, Si, As, and Se.

2. The lithium-manganese-iron-phosphate positive electrode material according to claim 1, wherein a proportion of the high-conductivity compound in the lithium-manganese-iron-phosphate positive electrode material ranges from 0.05 wt% to 0.5 wt%;
and/or the coating layer further comprises carbon, a proportion of the carbon in the coating layer in the lithium-manganese-iron-phosphate positive electrode material ranges from 1.5 wt% to 2.5 wt%;
and/or, the coating layer has a thickness ranging from 20 nm to 60 nm.

3. The lithium-manganese-iron-phosphate positive electrode material according to claim 1 or 2, wherein a molar amount of manganese in the lithium manganese iron phosphate accounts for 60% or more of a sum of molar amounts of manganese and iron;
and/or, the material for forming the inner core comprises carbon, and a proportion of the carbon in the inner core ranges from 0.1 wt% to 0.5 wt% of the inner core.

4. A preparation method for the lithium-manganese-iron-phosphate positive electrode material according to any one of claims 1-3, **characterized by** comprising:
mixing a lithium source, a first manganese source, an iron source, a phosphorus source, a first reducing carbon source and water, and performing first spray-drying and a first sintering treatment in sequence, so as to render an inner-core material; and
mixing the inner-core material, a second reducing carbon source, a non-metallic element, a second manganese source, and water, and performing second spray-drying and a second sintering treatment in sequence, so as to render the lithium-manganese-iron-phosphate positive electrode material,
wherein the non-metallic element comprises any one of B, S, P, Si, As, and Se.

5. The preparation method for the lithium-manganese-iron-phosphate positive electrode material according to claim 4, wherein the lithium source comprises a lithium salt or a hydrate of the lithium salt, wherein the lithium salt comprises at least one of lithium carbonate, lithium phosphate, lithium dihydrogen phosphate, and lithium hydroxide;
and/or the first manganese source comprises at least one of trimanganese tetroxide, manganese dioxide, dimanganese trioxide, and manganese carbonate;
and/or, the iron source comprises at least one of iron phosphate, iron oxalate, iron sesquioxide, and ferroferric oxide;
and/or, the phosphorus source comprises at least one of lithium dihydrogen phosphate, iron phosphate, ammonium dihydrogen phosphate, and phosphoric acid;
and/or, a molar ratio of lithium in the lithium source to manganese in the first manganese source, iron in the iron source, and phosphorus in the phosphorus source is 1.05:(0.50-0.90):(0.10-0.50):(1.00-1.03);
and/or, the first reducing carbon source comprises glucose;
and/or, a content of the first reducing carbon source satisfies at least one of following conditions: a ratio of a molar amount of carbon element in the first reducing carbon source to a sum of molar amounts of trivalent metal elements in the first manganese source and the iron source is (1.02-1.1):4, and a ratio of the molar amount of the carbon element in the first reducing carbon source to a molar amount of quadrivalent manganese element in the first manganese source is (1.02-1.1):2;
and/or, before performing the first spray-drying, the method further comprises a step of performing first grinding, wherein D50 of material after the first grinding ranges from 0.18 µm to 0.22 µm;
and/or, the first sintering is performed under protection of an inert gas, a temperature of the first sintering ranges from 660 °C to 790 °C, and a duration of the first sintering ranges from 8 h to 14 h.

6. The preparation method for the lithium-manganese-iron-phosphate positive electrode material according to claim 4, wherein the second reducing carbon source comprises at least one of citric acid, ascorbic acid, tartaric acid, and gluconic acid;
and/or, the second manganese source comprises at least one of manganese acetate, manganese citrate, manganese oxalate, and manganese tartrate.

7. The preparation method for the lithium-manganese-iron-phosphate positive electrode material according to claim 6, wherein a mass ratio of the inner-core material to the second reducing carbon source is (17-20): 1.

8. The preparation method for the lithium-manganese-iron-phosphate positive electrode material according to claim 6, wherein a molar ratio of the non-metallic element to manganese in the second manganese source is (1-2): 1;
and/or, the non-metallic element accounts for 0.015%-0.30% of a mass of the inner-core material;
and/or, before performing the second spray-drying, the method further comprises a step of performing second grinding, wherein D50 of material after the second grinding ranges from 0.20 µm to 0.40 µm.

9. The preparation method for the lithium-manganese-iron-phosphate positive electrode material according to any one of claims 4-8, wherein after mixing the inner-core material, the second reducing carbon source, the non-metallic element, the second manganese source, and water, the method further comprises a step of adjusting pH of slurry, so as to adjust the pH of the slurry to be 4.0-6.0;
and/or the second sintering is performed under protection of an inert gas, a temperature of the second sintering ranges from 550 °C to 610 °C, and a duration of the second sintering ranges from 4 h to 8 h.

10. A lithium-ion battery, **characterized in that** the lithium-ion battery comprises the lithium-manganese-iron-phosphate positive electrode material according to any one of claims 1-3 or comprises the lithium-manganese-iron-phosphate positive electrode material prepared by the preparation method for the lithium-manganese-iron-phosphate positive electrode material according to any one of claims 4-9.
